# EUROPÄISCHE PATENTSCHRIFT

(11) **EP 3 309 464 B1**
(45) Veröffentlichungstag und Bekanntmachung des Hinweises auf die Patenterteilung: **19.09.2018**
(21) Anmeldenummer: 16193425.2
(22) Anmeldetag: 12.10.2016
(51) Int. Cl.: F24D 19/10, G05D 23/19, H04L 12/28

(54) **RAUMTEMPERATURREGELANLAGE MIT EINEM BUSSYSTEM ZUM ANSTEUERN VON VENTILSTELLANTRIEBEN EINER FUSSBODENHEIZUNG**
CONTROL FOR CONTROLLING A ROOM TEMPERATURE WITH A BUS SYSTEM FOR ACTUATING VALVE ACTUATORS OF A FLOOR HEATING DEVICE
COMMANDE POUR ASSERVIR LA TEMPÉRATURE D'UN CHAMBRE AVEC UN BUS DE DONNÉES POUR ACTIONNER SERVOMOTEURS DES VANNES D'UN SOL CHAUFFANT

(43) Veröffentlichungstag der Anmeldung: 18.04.2018
(73) Patentinhaber: AFRISO-Euro-Index GmbH, 74363 Güglingen (DE)
(72) Erfinder: Aldinger, Ulrich, 70192 Stuttgart (DE)
(74) Vertreter: Kohler Schmid Möbus Patentanwälte

(56) Entgegenhaltungen:
- EP-A1- 2 871 421
- EP-A1- 2 871 424
- EP-A1- 3 059 652

## Beschreibung

Die vorliegende Erfindung betrifft eine Raumtemperaturregelanlage für eine mehrere Warmwasserheizkreise aufweisende Fußbodenheizung zum Heizen oder Kühlen von Räumen, mit jeweils einem von einem elektrisch angesteuerten Stellantrieb betätigten Heizungsventil in jedem der Warmwasserheizkreise, mit einem Regler, der die Stellantriebe elektrisch ansteuert, um die Raumtemperaturen in den warmwasserbeheizten Räumen zu regeln, mit einem Bussystem, an das zur elektrischen Ansteuerung der Stellantriebe der Regler und die Stellantriebe angeschlossen sind, und mit Rücklauftemperaturfühlern, welche die Rücklauftemperatur im Rücklauf des jeweiligen Warmwasserheizkreises messen und an das Bussystem angeschlossen sind, wobei der Regler programmiert ist, mindestens eine Komponente der Raumtemperaturregelanlage, insbesondere die Stellantriebe, anhand der per Bussystem an den Regler übertragenen Rücklauftemperaturen anzusteuern.

Eine derartige Raumtemperaturregelanlage ist beispielsweise durch die EP 2 871 421 A1 bekannt geworden.

Bei bekannten Raumtemperaturregelanlagen sind die Stellantriebe sowie auch Rücklauftemperaturfühler, welche die Rücklauftemperatur im Rücklauf des jeweiligen Warmwasserheizkreises messen, jeweils per Kabel mit dem Regler verbunden. Dies erfordert einen hohen Verdrahtungsaufwand und steigert das Risiko von Verdrahtungsfehlern.

Aus der eingangs genannten EP 2 871 421 A1 ist eine Raumtemperaturregelanlage mit einem hydraulischen Verteiler bekannt, welcher modular mit einem Hauptmodul und einem oder mehreren Lastmodulen aufgebaut ist. In jedem Lastmodul sind ein Regulierventil mit einem elektrischen Antriebsmotor und ein Temperatursensor angeordnet, wobei der Antriebsmotor und der Temperatursensor über einen Datenbus mit einer Steuereinrichtung verbunden sind.

Weiterhin ist aus der EP 3 059 652 A1 eine Steuereinrichtung zur Raumtemperaturregelung mit Temperaturreglern bekannt, wobei ein Temperatursensor im Vorlauf und ein Temperatursensor im Rücklauf angeordnet sind. Die Temperaturregler und die Temperatursensoren stehen über einen Datenbus mit einer Steuereinrichtung in Verbindung.

Es ist demgegenüber die Aufgabe der Erfindung, bei einer Raumtemperaturregelanlage den Verdrahtungsaufwand auf einen Minimum zu reduzieren.

Diese Aufgabe wird bei der eingangs genannten Raumtemperaturregelanlage erfindungsgemäß dadurch gelöst, dass die Heizungsventile im Rücklauf des jeweiligen Warmwasserheizkreises angeordnet sind und die Rücklauftemperaturfühler in den Heizungsventilen, insbesondere in deren Ventilstößeln, angeordnet sind und jeweils über eine im Stellantrieb innenliegend verlaufende elektrische Leitung mit dem Stellantrieb verbunden sind. Vorzugsweise sind die Stellantriebe als Thermoantrieb oder als Elektromotorantrieb ausgeführt. Im Fall von Elektromotorantrieben kann vom Regler auch ein hydraulischer Abgleich der Heizungsanlage durchgeführt werden.

Bei bevorzugten Ausführungsformen der Erfindung ist ein Vorlauftemperaturfühler, der die Vorlauftemperatur im Vorlauf der Warmwasserheizkreise misst, an den Regler, insbesondere über das Bussystem, angeschlossen. Der Regler ist programmiert, mindestens eine Komponente der Raumtemperaturregelanlage, insbesondere die Stellantriebe, anhand der an den Regler übertragenen Vor anzusteuern. Der Regler kann beispielsweise auch die Rücklauftemperaturen der einzelnen Warmwasserheizkreise mit der Vorlauftemperatur vergleichen und die jeweiligen Stellantriebe entsprechend ansteuern.

Besonders bevorzugt sind die Rücklauftemperaturfühler jeweils über den Stellantrieb ihres zugehörigen Warmwasserheizkreises an das Bussystem angeschlossen, insbesondere über eine Digitalisierungseinheit des Stellantriebs, die ein analoges Messsignal des Rücklauftemperaturfühlers in ein digitales Messsignal für das Bussystem wandelt. Aufgrund der innenliegenden Leitungsverbindung ist keine außenliegende zusätzliche Kabelverbindung notwendig.

Die Raumtemperaturregelanlage umfasst vorteilhaft jeweils einen Temperaturmessfühler zum Messen der Isttemperatur in jedem warmwasserbeheizten Raum und jeweils eine Solltemperatur-Einstelleinrichtung zum Einstellen der Solltemperatur für jeden warmwasserbeheizten Raum, wobei der Regler programmiert ist, mindestens eine Komponente der Raumtemperaturregelanlage, insbesondere die Stellantriebe, anhand der gemessenen Isttemperatur und der eingestellten Solltemperatur anzusteuern. Die Übertragung der Ist- und Solltemperaturen erfolgt entweder im Fall von funkbetriebenen Raumtemperaturfühlern und Solltemperatur-Einstelleinrichtungen drahtlos an den Regler oder im Fall von drahtgebundenen Raumtemperaturfühlern und Solltemperatur-Einstelleinrichtungen per Kabel, und zwar entweder direkt an den Regler oder an eine Verdrahtungsbox, welche über ein Bussystem an den Regler angeschlossen ist. Über die Verdrahtungsbox können fast beliebig viele Raumtemperaturfühler oder sonstige Komponenten der Raumtemperaturregelanlage an den Regler angeschlossen werden.

Vorteilhaft ist ein Außentemperaturfühler, der die Außentemperatur misst, an den Regler, insbesondere über Funk oder das Bussystem, angeschlossen, und der Regler ist programmiert, mindestens eine Komponente der Raumtemperaturregelanlage, insbesondere die Stellantriebe, anhand der an den Regler übertragenen Außentemperatur anzusteuern.

Vorzugsweise kann die Raumtemperaturregelanlage mindestens eine weitere, an den Regler angeschlossene Komponente (z.B. eine Heizungsumwälzpumpe oder einen Mischerantrieb) aufweisen, die vom Regler anhand einer oder mehrerer der an den Regler übertragenen Temperaturen angesteuert wird.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erfindungsgemäße Raumtemperaturregelanlage für eine Fußbodenheizung mit mehreren Warmwasserheizkreisen; und
- Fig. 2: einen Stellantrieb zum Betätigen eines Heizungsventils eines in Fig.1 gezeigten Warmwasserheizkreises.

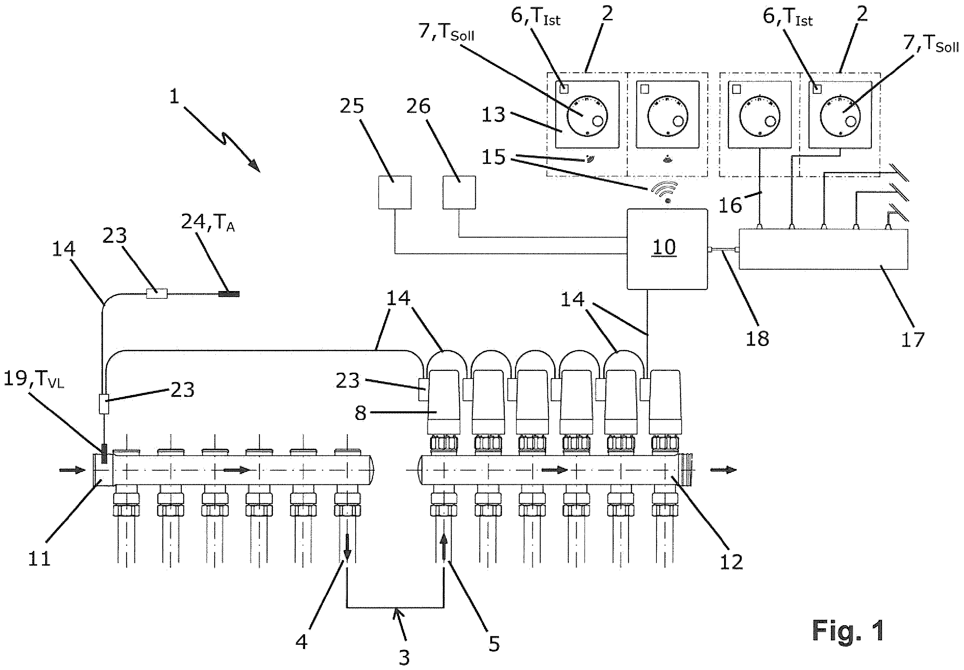

Die in **Fig. 1** gezeigte Raumtemperaturregelanlage **1** für eine Fußbodenheizung dient zum Regeln der jeweiligen Isttemperatur **T_{Ist}** in mehreren warmwasserbeheizten Räumen **2** auf jeweils eine Solltemperatur **T_{Soll}.**

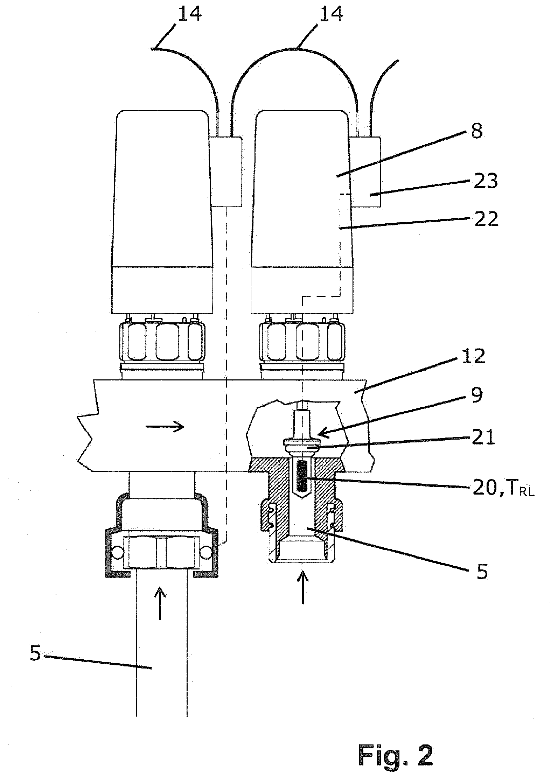

Die Raumtemperaturregelanlage 1 umfasst für jeden warmwasserbeheizten Raum 2 jeweils einen Warmwasserheizkreis **3** zum Heizen oder Kühlen des Raumes 2 mit einem Vorlauf **4** und einem Rücklauf **5** für das Heizwasser, einen in dem Raum 2 angeordneten Raumtemperaturmessfühler **6** zum Messen der Raum-Isttemperatur T_{Ist}, eine z.B. in dem Raum 2 angeordnete Solltemperatur-Einstelleinrichtung **7** zum Einstellen der Raum-Solltemperatur T_{Soll}, ein von einem elektrisch angesteuerten Stellantrieb **8** betätigtes Heizungsventil **9** (Fig. 2) im Rücklauf 5 des Warmwasserheizkreises 2, sowie einen Regler **10,** der anhand der gemessenen Isttemperatur T_{Ist} und der eingestellten Solltemperatur T_{Soll} die Stellantriebe 8 elektrisch ansteuert, um die Raumtemperaturen in den einzelnen Räumen 2 zu regeln. Die Vorläufe 4 der einzelnen Warmwasserheizkreise 3 gehen alle von einem Vorlauf-Verteilerrohr **11** ab, und die Rückläufe 5 der einzelnen Warmwasserheizkreise 3 münden alle in ein Rücklauf-Verteilerrohr **12.** Anhand der übertragenen Ist- und/oder Solltemperaturen T_{Ist}, T_{Soll} kann der Regler 10 ggf. auch weitere Komponenten der Raumtemperaturregelanlage 1, wie z.B. eine Heizungsumwälzpumpe 25 oder einen Mischerantrieb 26, ansteuern.

Im gezeigten Ausführungsbeispiel sind der Raumtemperaturmessfühler 6 und die zugehörige Solltemperatur-Einstelleinrichtung 7 in ein gemeinsames Gehäuse 13 integriert.

Die elektrische Ansteuerung der Stellantriebe 8 erfolgt über ein Bussystem (z.B. eine Busleitung) 14, an das der Regler 10 und die Stellantriebe 8 angeschlossen sind. Bei den Stellantrieben 8 kann es sich beispielsweise um einen Elektromotorantrieb oder einen Thermoantrieb handeln.

Die Übertragung der gemessenen Isttemperaturen T_{Ist} und der eingestellten Solltemperaturen T_{Soll} erfolgt entweder im Fall von funkbetriebenen Raumtemperaturfühlern und Solltemperatur-Einstelleinrichtungen drahtlos per Funksignal **15** an den Regler 10 oder im Fall von drahtgebundenen Raumtemperaturfühlern und Solltemperatur-Einstelleinrichtungen per Kabel **16** direkt an den Regler 10 oder, wie in Fig. 1 gezeigt ist, an eine Verdrahtungsbox **17,** welche ihrerseits über ein weiteres Bussystem **18** an den Regler 10 angeschlossen ist. Statt über ein weiteres Bussystem kann die Verdrahtungsbox 17 auch über das Bussystem 14 mit dem Regler 10 verbunden sein.

Die Raumtemperaturmessfühler 6 und Stellantriebe 8 können nach der Montage der Fußbodenheizung wie folgt den jeweiligen Räumen 2 bzw. den einzelnen Heizwasserkreisen 3 zugeordnet werden:
Der Regler 10 weist über eine Auto-Adressierung jedem Raumtemperaturmessfühler 6 und jedem Stellantrieb 8 automatisch eine Adresse zu. Durch Öffnen des Stellantriebs 8 des ersten Heizungsventils 9 kann über den Temperaturanstieg in einem der Räume 2 der zugehörige Raumtemperaturmessfühler 6 detektiert und zugeordnet werden. Nach dem Schließen des Stellantriebs 8 des ersten Heizungsventils 9 wird dieser Vorgang mit jedem weiteren Stellantrieb 8 entsprechend durchgeführt. Dies funktioniert sowohl mit drahtlosen als auch mit drahtgebundenen Raumtemperaturmessfühlern 6. Der Verdrahtungs- und Installationsaufwand ist dadurch auf ein Minimum reduziert.

Im Fall, dass die Stellantriebe 8 als Elektromotorantriebe ausgeführt sind, kann vom Regler 10 auch ein hydraulischer Abgleich der Heizungsanlage durchgeführt werden.

Weiterhin ist am Vorlauf-Verteilerrohr 11, also am gemeinsamen Vorlaufstrang aller Warmwasserheizkreise 3, ein Vorlauftemperaturfühler **19** angeordnet, der die Vorlauftemperatur **T_{VL}** des Heizwassers misst und über das Bussystem 14 an den Regler 10 angeschlossen ist. Genauer gesagt ist der Vorlauftemperaturfühler 19 mit einer Digitalisierungseinheit (Digitalisierungselektronik) **23** verbunden, die das analoge Messsignal des Vorlauftemperaturfühlers 19 in ein digitales Messsignal für das Bussystem 14 wandelt.

Wie in **Fig. 2** gezeigt, ist in den Rückläufen 5 der Warmwasserheizkreise 3 jeweils ein Rücklauftemperaturfühler **20** angeordnet, der die Rücklauftemperatur **T_{RL}** des Heizwassers im Rücklauf 5 des jeweiligen Warmwasserheizkreises 3 misst und an das Bussystem 14 angeschlossen ist. Der Rücklauftemperaturfühler 20 befindet sich an einem vom Stellantrieb 8 betätigten Ventilstößel **21** des Heizungsventils 9 und ist vorteilhaft in das rücklaufseitige Ventilstößelende integriert, an dem bei gesperrtem Heizungsventil 9 das im Rücklauf 5 befindliche Heizwasser ansteht. Der Rücklauftemperaturfühler 20 ist über eine im Stellantrieb 8 integrierte elektrische Leitung **22** mit dem Stellantrieb 8 verbunden, genauer gesagt mit einer Digitalisierungseinheit (Digitalisierungselektronik) 23 des Stellantriebs 8, die das analoge Messsignal des Rücklauftemperaturfühlers 20 in ein digitales Messsignal für das Bussystem 14 wandelt. Aufgrund der innenliegenden Leitung 22 ist keine außenliegende zusätzliche Kabelverbindung notwendig. Der Rücklauftemperaturfühler 20 ist also nicht direkt, sondern über den Stellantrieb 8 an das Bussystem 14 angeschlossen, wobei die Digitalisierungseinheit 23 des Stellantriebs 8 für die Übermittlung der Rücklauftemperatur **T_{RL}** an den Regler 10 verwendet wird.

Der Regler 10 kann die Stellantriebe 8 auch anhand der übertragenen Vor- und/oder Rücklauftemperaturen **T**_{RL}, T_{VL} ansteuern. Insbesondere kann der Regler 10 die gemessenen Rücklauftemperaturen **T_{RL}** der einzelnen Warmwasserheizkreise 3 mit der gemessenen Vorlauftemperatur T_{VL} vergleichen und die Stellantriebe 8 entsprechend ansteuern.

Statt wie gezeigt im Ventilstößel 21 kann der Rücklauftemperaturfühler 20 auch als Anlegefühler ausgeführt sein, der entsprechend isoliert außen an der metallenen Rohrverschraubung des Rücklaufanschlusses des Rücklauf-Verteilerrohrs 12 angebracht ist. Die so gemessene Oberflächentemperatur der Rohrverschraubung wird über eine außenliegende Kabelverbindung an den Stellantrieb 8 und von dort über das Bussystem 14 an den Regler 10 übermittelt.

Weiterhin ist noch ein Außentemperaturfühler **24,** der die Außentemperatur **T_{A}** misst, über eine Digitalisierungseinheit (Digitalisierungselektronik) 23, welche das analoge Messsignal des Außentemperaturfühlers 24 in ein digitales Messsignal für das Bussystem 14 wandelt, an das Bussystem 14 angeschlossen. Alternativ kann der Außentemperaturfühler 24 aber auch per Funk (nicht gezeigt) direkt mit dem Regler 10 verbunden sein. Anhand der gemessenen Außentemperatur T_{A} kann der Regler 10 die Stellantriebe 8 und ggf. auch weitere Komponenten der Raumtemperaturregelanlage 1 ansteuern. Diese weiteren Komponenten können vom Regler 10 bei Bedarf auch anhand einer oder mehrerer der an den Regler 10 übertragenen Temperaturen T_{Ist}, T_{Soll}, T_{RL}, T_{VL} angesteuert werden.

## Patentansprüche

1. Raumtemperaturregelanlage (1) für eine mehrere Warmwasserheizkreise (3) aufweisende Fußbodenheizung zum Heizen oder Kühlen von Räumen (2), mit jeweils einem von einem elektrisch angesteuerten Stellantrieb (8) betätigten Heizungsventil (9) in jedem der Warmwasserheizkreise (3), mit einem Regler (10), der die Stellantriebe (8) elektrisch ansteuert, um die Raumtemperaturen in den warmwasserbeheizten Räumen (2) zu regeln, mit einem Bussystem (14), an das zur elektrischen Ansteuerung der Stellantriebe (8) der Regler (10) und die Stellantriebe (8) angeschlossen sind, und mit Rücklauftemperaturfühlern (20), welche die Rücklauftemperatur (T_{RL}) im Rücklauf (5) des jeweiligen Warmwasserheizkreises (3) messen und an das Bussystem (14) angeschlossen sind, wobei der Regler (10) programmiert ist, mindestens eine Komponente der Raumtemperaturregelanlage (1), insbesondere die Stellantriebe (8), anhand der per Bussystem (14) an den Regler (10) übertragenen Rücklauftemperaturen (T_{RL}) anzusteuern,
**dadurch gekennzeichnet,**
**dass** die Heizungsventile (9) im Rücklauf (5) des jeweiligen Warmwasserheizkreises (3) angeordnet sind und die Rücklauftemperaturfühler (20) in den Heizungsventilen (9), insbesondere in deren Ventilstößeln (21), angeordnet sind und jeweils über eine im Stellantrieb (8) innenliegend verlaufende elektrische Leitung (22) mit dem Stellantrieb (8) verbunden sind.

2. Raumtemperaturregelanlage nach Anspruch 1, **dadurch gekennzeichnet, dass** die Rücklauftemperaturfühler (20) jeweils über den Stellantrieb (8) ihres zugehörigen Warmwasserheizkreises (3) an das Bussystem (14) angeschlossen sind.

3. Raumtemperaturregelanlage nach Anspruch 2, **dadurch gekennzeichnet, dass** die Stellantriebe (8) jeweils eine Digitalisierungseinheit (23) aufweisen, die ein analoges Messsignal des Rücklauftemperaturfühlers (20) in ein digitales Messsignal für das Bussystem (14) wandelt.

4. Raumtemperaturregelanlage nach einem der vorhergehenden Ansprüche,
**dadurch gekennzeichnet, dass** die Stellantriebe (8) jeweils als Thermoantrieb oder als Elektromotorantrieb ausgeführt sind.

5. Raumtemperaturregelanlage nach einem der vorhergehenden Ansprüche,
**dadurch gekennzeichnet, dass** ein Vorlauftemperaturfühler (19), der die Vorlauftemperatur (T_{VL}) im Vorlauf der Warmwasserheizkreise (3) misst, an den Regler (10), insbesondere über das Bussystem (14), angeschlossen ist und dass der Regler (10) programmiert ist, mindestens eine Komponente der Raumtemperaturregelanlage (1), insbesondere die Stellantriebe (8), anhand der an den Regler (8) übertragenen Vorlauftemperatur (T_{VL}) anzusteuern.

6. Raumtemperaturregelanlage nach einem der vorhergehenden Ansprüche, **gekennzeichnet durch** jeweils einen Temperaturmessfühler (6) zum Messen der Isttemperatur (T_{Ist}) in jedem warmwasserbeheizten Raum (2) und durch jeweils eine Solltemperatur-Einstelleinrichtung (7) zum Einstellen der Solltemperatur (T_{Soll}) für jeden warmwasserbeheizten Raum (2), wobei der Regler (10) programmiert ist, mindestens eine Komponente der Raumtemperaturregelanlage (1), insbesondere die Stellantriebe (8), anhand der gemessenen Isttemperatur (T_{Ist}) und der eingestellten Solltemperatur (T_{Soll}) anzusteuern.

7. Raumtemperaturregelanlage nach Anspruch 6, **dadurch gekennzeichnet, dass** zumindest einige, insbesondere alle Temperaturmessfühler (6) und/oder zumindest einige, insbesondere alle Solltemperatur-Einstelleinrichtungen (7) per Funksignal (15) mit dem Regler (10) verbunden sind.

8. Raumtemperaturregelanlage nach Anspruch 6 oder 7, **dadurch gekennzeichnet, dass** zumindest einige, insbesondere alle Temperaturmessfühler (6) und/oder zumindest einige, insbesondere alle Solltemperatur-Einstelleinrichtungen (7) per Kabel (16) entweder mit dem Regler (10) oder mit einer Verdrahtungsbox (17), welche ihrerseits über ein Bussystem (18) an den Regler (10) angeschlossen ist, verbunden sind.

9. Raumtemperaturregelanlage nach einem der vorhergehenden Ansprüche,
**dadurch gekennzeichnet, dass** ein Außentemperaturfühler (24), der die Außentemperatur (T_{A}) misst, an den Regler (10), insbesondere über Funk oder das Bussystem (14), angeschlossen ist und dass der Regler (10) programmiert ist, mindestens eine Komponente der Raumtemperaturregelanlage (1), insbesondere die Stellantriebe (8), anhand der an den Regler (10) übertragenen Außentemperatur (T_{A}) anzusteuern.

10. Raumtemperaturregelanlage nach einem der vorhergehenden Ansprüche, **gekennzeichnet durch** mindestens eine weitere, vom Regler (10) gesteuerte Komponente der Raumtemperaturregelanlage (1), insbesondere eine Heizungsumwälzpumpe (25) und/oder einen Mischerantrieb (26).

## Claims

1. Room temperature control system (1) for a floor heating comprising a plurality of hot water heating circuits (3) for heating or cooling rooms (2), comprising one heating valve (9) in each hot water heating circuit (3), which is operated by an electrically controlled actuator (8), a controller (10) which electrically controls the actuators (8) in order to control the room temperatures in the rooms (2) heated with hot water, a bus system (14) to which the controller (10) and the actuators (8) are connected for electrically controlling the actuators (8), and return temperature sensors (20) which measure the return temperature (R_{RL}) in the return flow (5) of the respective hot water heating circuit (3) and are connected to the bus system (14), wherein the controller (10) is programmed to control at least one component of the room temperature control system (1), in particular the actuators (8), on the basis of the return temperatures (T_{RL}) transferred to the controller (10) via the bus system (14),
**characterized in that**
the heating valves (9) are arranged in the return flow (5) of the respective hot water heating circuit (3) and the return temperature sensors (20) are arranged in the heating valves (9), in particular in their valve stems (21), and are each connected to the actuator (8) via an electric line (22) which extends in the interior of the actuator (8).

2. Room temperature control system according to claim 1, **characterized in that**
the return temperature sensors (20) are each connected to the bus system (14) via the actuator (8) of their associated hot water heating circuit (3).

3. Room temperature control system according to claim 2, **characterized in that**
the actuators (8) each have a digitizing unit (23) which converts an analogue measuring signal of the return temperature sensor (20) into a digital measuring signal for the bus system (14).

4. Room temperature control system according to any one of the preceding claims, **characterized in that** the actuators (8) are each designed as a thermal drive or as an electric motor drive.

5. Room temperature control system according to any one of the preceding claims, **characterized in that** a flow temperature sensor (19), which measures the flow temperature (T_{L}) in the flow line of the hot water heating circuits (3), is connected to the controller (10), in particular via the bus system (14), and that the controller (10) is programmed to control at least one component of the room temperature control system (1), in particular the actuators (8), on the basis of the flow temperature (T_{VL}) transmitted to the controller (8).

6. Room temperature control system according to any one of the preceding claims, **characterized by** one temperature sensor (6) in each case for measuring the actual temperature (T_{Ist}) in each room (2) which is heated by hot water, and by one desired temperature adjustment device (7) in each case for adjusting the desired temperature (T_{Soll}) for each room (2) which is heated by hot water, wherein the controller (10) is programmed to control at least one component of the room temperature control system (1), in particular the actuators (8), on the basis of the measured actual temperature (T_{Ist}) and the adjusted desired temperature (T_{Soll}).

7. Room temperature control system according to claim 6, **characterized in that** at least some, in particular all temperature sensors (6) and/or at least some, in particular all desired temperature adjustment devices (7) are connected to the controller (10) via radio signal (15).

8. Room temperature control system according to claim 6 or 7, **characterized in that** at least some, in particular all, temperature sensors (6) and/or at least some, in particular, all desired temperature adjustment devices (7) are connected via cable (16) either to the controller (10) or to a wiring box (17) which itself is connected via a bus system (18) to the controller (10).

9. Room temperature control system according to any one of the preceding claims, **characterized in that** an external temperature sensor (24), which measures the external temperature (T_{A}) is connected to the controller (10), in particular via radio or the bus system (14), and that the controller (10) is programmed to control at least one component of the room temperature control system (1), in particular the actuators (8), on the basis of the external temperature (T_{A}) transferred to the controller (10).

10. Room temperature control system according to any one of the preceding claims, **characterized by** at least one further component of the room temperature control system (1), which is controlled by the controller (10), in particular a heating circulation pump (25) and/or a mixer drive (26).

## Revendications

1. Système de régulation de température ambiante (1) pour un chauffage par le sol présentant plusieurs circuits de chauffage à eau chaude (3) pour le chauffage ou le refroidissement de pièces (2), avec une vanne de chauffage (9) actionnée par un actionneur (8) à commande électrique dans chacun des circuits de chauffage à eau chaude (3), avec un régulateur (10) qui commande électriquement les actionneurs (8) pour réguler les températures ambiantes dans les pièces chauffées à l'eau chaude (2), avec un système de bus (14) auquel le régulateur (10) et les actionneurs (8) sont raccordés pour la commande électrique des actionneurs (8), et avec des capteurs de température de retour (20) qui mesurent la température de retour (T_{RL}) dans le retour (5) du circuit de chauffage à eau chaude (3) respectif et sont raccordés au système de bus (14), dans lequel le régulateur (10) est programmé pour commander au moins un composant du système de régulation de température ambiante (1), en particulier les actionneurs (8), au moyen des températures de retour (T_{RL}) transmises au régulateur (10) par l'intermédiaire du système de bus (14),
**caractérisé en ce**
**que** les vannes de chauffage (9) sont disposées dans le retour (5) du circuit de chauffage à eau chaude respectif (3) et les capteurs de température de retour (20) sont disposés dans les vannes de chauffage (9), en particulier dans leurs poussoirs de vanne (21), et sont reliés chacun à l'actionneur (8) par une ligne électrique (22) s'étendant à l'intérieur de l'actionneur (8).

2. Système de régulation de température ambiante selon la revendication 1,
**caractérisé en ce que** les capteurs de température de retour (20) sont raccordés chacun au système de bus (14) par l'intermédiaire de l'actionneur (8) de leur circuit de chauffage à eau chaude (3) associé.

3. Système de régulation de température ambiante selon la revendication 2,
**caractérisé en ce que** les actionneurs (8) présentent chacun une unité de numérisation (23) qui convertit un signal de mesure analogique du capteur de température de retour (20) en un signal de mesure numérique pour le système de bus (14).

4. Système de régulation de température ambiante selon l'une des revendications précédentes, **caractérisé en ce que** les actionneurs (8) sont réalisés chacun sous la forme d'un entraînement thermique ou d'un entraînement par moteur électrique.

5. Système de régulation de température ambiante selon l'une des revendications précédentes, **caractérisé en ce qu'**un capteur de température de départ (19) qui mesure la température de départ (T_{VL}) dans le départ des circuits de chauffage à eau chaude (3) est raccordé au régulateur (10), en particulier par l'intermédiaire du système de bus (14), et que le régulateur (10) est programmé pour commander au moins un composant du système de régulation de température ambiante (1), en particulier les actionneurs (8), au moyen de la température de départ (T_{VL}) transmise au régulateur (8).

6. Système de régulation de température ambiante selon l'une des revendications précédentes, **caractérisé par** un capteur de température (6) pour mesurer la température réelle (T_{Réelle}) dans chaque pièce (2) chauffée à l'eau chaude et par un dispositif de réglage de température de consigne (7) pour régler la température de consigne (T_{Consigne}) pour chaque pièce (2) chauffée à l'eau chaude, le régulateur (10) étant programmé pour commander au moins un composant du système de régulation de température ambiante (1), en particulier les actionneurs (8), au moyen de la température réelle (T_{Réelle}) mesurée et de la température de consigne (T_{Consigne}) réglée.

7. Système de régulation de température ambiante selon la revendication 6, **caractérisé en ce qu'**au moins certains, en particulier tous les capteurs de température (6) et/ou au moins certains, en particulier tous les dispositifs de réglage de température de consigne (7) sont reliés au régulateur (10) par signal radio (15).

8. Système de régulation de température ambiante selon la revendication 6 ou 7, **caractérisé en ce qu'**au moins certains, en particulier tous les capteurs de température (6) et/ou au moins certains, en particulier tous les dispositifs de réglage de température de consigne (7) sont reliés par câble (16) soit au régulateur (10), soit à un boîtier de câblage (17) qui est lui-même relié au régulateur (10) par l'intermédiaire d'un système de bus (18).

9. Système de régulation de température ambiante selon l'une des revendications précédentes, **caractérisé en ce qu'**un capteur de température extérieure (24) qui mesure la température extérieure (T_{A}) est raccordé au régulateur (10), en particulier par radio ou par le système de bus (14), et que le régulateur (10) est programmé pour commander au moins un composant du système de régulation de température ambiante (1), en particulier les actionneurs (8), au moyen de la température extérieure (T_{A}) transmise au régulateur (10).

10. Système de régulation de température ambiante selon l'une des revendications précédentes, **caractérisé par** au moins un autre composant du système de régulation de température ambiante (1) commandé par le régulateur (10), en particulier une pompe de circulation de chauffage (25) et/ou un entraînement de mélangeur (26).
